# EUROPEAN PATENT SPECIFICATION

(11) **EP 2 743 059 B1**
(45) Date of publication and mention of the grant of the patent: **23.05.2018**
(21) Application number: 13197182.2
(22) Date of filing: 13.12.2013
(51) Int. Cl.: B29C 65/08, B65B 51/22, B65B 59/04, B65B 9/10, F15B 15/10

(54) **Retrofit of a form-fill-seal machine heat station with an advanced ultrasonic welding kit**
Nachrüsten einer Form-Füll-Siegelmaschinenwärmestation mit erweitertem Ultraschallschweißkit
Rééquipement d'une machine de formage-remplissage-scellage avec un kit de soudage ultrasonique avancé

(30) Priority: 13.12.2012 US 201213713237; 17.10.2013 US 201314056050
(43) Date of publication of application: 18.06.2014
(73) Proprietor: Rinco Ultrasonics USA Inc., Danbury, CT 06810 (US)
(72) Inventor: Hull, Gordon, Newtown, CT 06470 (US)
(74) Representative: Neumann Müller Oberwalleney & Partner Patentanwälte

(56) References cited:
- EP-A1- 0 967 151
- EP-A2- 2 447 042
- GB-A- 1 216 743

## Description

### FIELD OF THE INVENTION

The present invention relates to improvements in form-fill-seal machines, and more particularly to apparatus which are capable of being retrofit onto such machines to improve the machine's productivity through replacement of old-technology heat-sealing elements using a kit that includes an advanced ultrasonic welding stack and anvil.

### BACKGROUND OF THE INVENTION

The packaging of food and other products with a sheet of flexible plastic film through an automated process using a machine is typically achieved by butting and sealing the plastic film to form a pouch. There are numerous examples of such machines, which are referred to within the industry as form-fill-seal machines, and which may be further subdivided into categories as being either horizontal, vertical, or rotary form-fill-seal machines. An example of a horizontal form-fill-seal machine is shown by U.S. Patent No. 5,826,403 to Haley; an example of a vertical form-fill-seal machine is shown by U.S. Patent to 4,117,647 to Rossi; while an example of a rotary form-fill-seal machine is shown by 6,212,859 to Bielik.

For a substantial period of time, these form-fill-seal machines utilized heat elements, such as the "heated fin wheels" of the Haley device, to seal the package bottom and its side seam to create a pouch, and after filling that pouch with product, a final heat element would seal the top open end of the pouch to form the package. An early marriage of ultrasonic welding principles for sealing of plastic films with a packaging machine is shown by the 1981 U.S. Patent No. 4,288,965 to James, for a "Form-Fill-Seal Packaging Method and Apparatus." Ultrasonic welding has since become the preferred method of sealing, because, among other reasons, ultrasonic weld times are less than one second in duration, the process lacks the potential for damage to the packaging material or product from an excessive application of heat, for which traditional heating elements are susceptible, and because the ultrasonic welding process is much better suited to seal through contaminants and product, which the heat sealing process accomplishes poorly, if at all.

In addition, GB 1 216 743 A by Robertshaw Controls Corp. discloses a sonic welding apparatus for forming sealed channels. However, the Robertshaw patent teaches the use of air cylinders that are used to drive a horn support and corresponding horn in a downward stroke, to contact the plates that are desirably welded together, and which are support upon a fixed pedestal.

EP 2 447 042 A2, also found within U.S. Patent No. 8,376,016, discloses an advanced anvil and sonotrode, each of which may be utilized within the presently disclosed sealing station for retrofit upon an older form-fil-seal machine.

Also, European Patent EP 0 967 151 A1 by Polese discloses a packaging station for an automatic packaging machine. The packaging station disclosed by Polese is designed to create a tubular wrapper that is closed on three of its sides, but is open at the front, and may thus be used for packaging of a paint brush. The welding device disclosed by Polese includes upper and lower welding elements, each of which are slidable, relative to vertical uprights, between a standby position and a weld position. Respective pneumatic actuators, similar to those disclosed by U.S. Patent No. 2,967,511, are used by Polese and positioned at distal ends of each of the weld elements, being opposite to the portion of the weld elements that contacts the film, to thereby drive the elements between the two positions. However, experiments conducted by the Applicant have found such a structural arrangement to be inadequate for achieving the desired packaging rates, and it would furthermore fail to occupy the very limited volume that is available for retrofitting the sealing station of existing form-fil-seal machines.

However, while that technology may easily be incorporated into newly designed form-fill-seal packaging machines, consumers who either recently or long ago purchased machines that seal through the direct application of heat have been at an impasse. The owner's of those machines do not wish or simply cannot afford the expense of a new array of packaging machines, nor can they afford to not produce packaging with the durability that their competitors will soon be utilizing through the use of machines incorporating this new apparatus. The problem has one added dimension of complexity.

The different types of packaging machines may dictate forming the pouch in different stages and at different locations within the machine. In addition, it is common to have at least one or even multiple heat seal stations just for the final top end sealing of multiple product-filled pouches. Therefore, it is highly desirable to incorporate advanced ultrasonic welding technology onto existing machines, but attempts to accomplish such a retro-fit by package machine operators has been unsuccessful, because of the space-constrained volume allocated to the replacement unit. The current invention discloses an adaptable retrofit kit and method for successfully accomplishing retrofitting of the heat station for different kinds of form-fill-seal machines.

### OBJECTS OF THE INVENTION

It is an object of the invention to provide a means of retrofitting the heat station of a form-fill-seal machine with advanced ultrasonic welding equipment. It is another object of the invention to provide a means of retrofitting a space-constrained volume of a form-fill-seal or pre-made pouch type machine with a kit comprising advanced ultrasonic welding equipment. It is a further object of the invention to provide a versatile retrofit kit for replacing a heat station with a kit comprising advanced ultrasonic welding, for either a horizontal or a rotary type of form-fill-seal or pre-made pouch type machine. It is another object of the invention to provide a retrofit kit for advanced ultrasonic weld sealing of two or more product pouches simultaneously. Further objects and advantages of the invention will become apparent from the following description and claims, and from the accompanying drawings.

### SUMMARY OF THE INVENTION

Advanced ultrasonic welding components are readily incorporated into the design of new form-fill-seal machines, but the owners of older machines, which utilize heat-seal stations, were unsuccessful at devising suitable apparatus and methods for retrofit of the sealing equipment. The invention provides an ultrasonic sealing station according to claim 1. Actuation of each carriage may be through the pressurization of the fluidic muscles, which in turn causes cyclic expansion of the chamber of each muscle, which is accompanied by linear contraction along its length. The contraction of each fluidic muscle causes simultaneous converging translation of the first and second mounting members relative to the linear rail, to cause engagement of a surface of the anvil with a surface of the sonotrode. Synchronizing the electrical power to the stack to correspond to this period of engagement, permits sealing of pouches that are moved along a conveyor or Rotary dial and positioned between the anvil and sonotrode. Depressurization of the fluidic muscles causes reverse translation and disengagement of the anvil from the sonotrode, after which the conveyor or rotary dial may advance to cause exiting of the sealed pouch, and positioning of another unsealed pouch between the anvil/sonotrode combination.

Specially configured in-line arrangements of the anvil/sonotrode, the bearing carriages, the first fluidic muscle, and the second fluidic muscle, serve to provide a very narrow profile, which permits side-by-side kit installations for a retrofit that accomplishes duplex, triplex, or more sealing of pouches on a horizontal machine.

The first and second fluidic muscles may be configured to be depressurized to cause simultaneous reverse-translation of said first and second mounting members relative to said housing to cause disengagement of said surface of said anvil from said surface of said sonotrode. In one embodiment, said first fluidic muscle and said second fluidic muscle are substantially the same size, and are configured to provide an equal amount of translation for said first mounting member and for said second muscle mounting member. The ultrasonic stack may be releasably secured to said second mounting member comprises: a first pair of clamp blocks, with each being fixedly secured to said second mounting member, and a second pair of corresponding clamp blocks being respectively secured to said first set of clamp blocks using a set screw, to thereby releasably secure said ultrasonic stack between said first pair of clamp blocks and said second pair of lamp blocks. The anvil may be adjustably secured to said first mounting member, the adjustable securing comprising: a plurality of mounting feet being threadably engaged within internally threaded orifices in said anvil, and a corresponding plurality of screws to mount said anvil and mounting feet to said first mounting member. The first and second fluidic muscles can be fixed to said housing and respectively to said first and said second mounting members with each fluidic muscle being disposed in-line relative to said linear rail and in-line relative to said anvil and sonotrode, to form a narrow profile. In another embodiment, said first end of said first fluidic muscle is configured to be secured to said housing through an orifice in said second mounting member; and wherein said first end of said second fluidic muscle is configured to be secured to said housing through an orifice in said first mounting member. The ultrasonic stack may comprise a booster and a converter. The retrofit kit may further comprise a horizontal machine spacer assembly and/or a rotary machine column assembly configured with a column assembly having a fixed static height or an adjustable "z" direction height. Another embodiment of the invention also provides a method of retrofitting one or more heat sealing elements of a form-fill-seal machine according to claim 9.

### BRIEF DESCRIPTION OF THE DRAWINGS

- FIG. 1: is a perspective view of a first embodiment of the main components of an advanced ultrasonic welding retrofit kit of the current invention, with a housing side panel removed to expose the fluid mechanical muscles therein.
- FIG. 2: is a perspective view of the retrofit kit of Figure 1, with the housing panel shown installed to enclose the fluid mechanical muscles.
- FIG. 3: is an enlarged side view of a second embodiment of the retrofit kit of the current invention.
- FIG. 3A: is a further enlarged view of the retrofit kit of Figure 3.
- FIG. 4: is an end view of the retrofit kit of Figure 3.
- FIG. 5: is a perspective view of the retrofit kit of Figure 3.
- FIG. 6: is the perspective view of the retrofit kit of Figure 5, being reduced in size and shown with an optional horizontal machine spacer, and with an optional rotary machine column assembly that may be configured with a fixed static height, or an adjustable height in the vertical ("Z") direction.
- FIG. 7: is an exploded view of the parts comprising the retrofit kit, as seen in Figure 6.
- FIG. 8: is a front view of a rotary form-fill-seal machine capable of being retrofitted with the advanced ultrasonic welding retrofit kit of Figure 6.
- FIG. 9: is a top view of the rotary form-fill-seal machine of Figure 8.
- FIG. 10A: is a side view of a prior art ultrasonic welding machine.
- FIG 10B: is a front view of the prior art ultrasonic welding machine of Figure 10A.
- FIG. 11: is a detail view of an anvil that is usable with the present invention, along with leveling feet and a mounting base that is securable to the housing herein.
- FIG. 12: is an exploded view of the anvil, leveling feet, and mounting base of Figure 11.
- FIG. 13: is an exploded view of a converter, a booster, a sonotrode, and an anvil that may be used to weld straight patterns using the energy director grids associated with the present invention.
- FIG. 13A: is a side view of one embodiment of a horn containing a series of slotted openings.
- FIG. 14: is an isometric view of the anvil formed with the energy director grids associated with the present invention.
- FIG. 15: is a top view of the anvil of Figure 14.
- FIG. 16: is a side view of the anvil of Figure 14.
- FIG. 17: is an end view of the anvil of Figure 14.
- FIG. 18: is an enlarged detail view of anvil of Figure 14.
- FIG. 19: is an enlarged detail view of the grid surface of the anvil of Figure 7.
- FIG. 20: is a section cut through the anvil of Figure 7, and is shown rotated 45 degrees clockwise.
- FIG. 20A: a section cut through an alternative embodiment of the anvil of the present invention.
- FIG. 21A: is a front view of an alternate embodiment of the horn of the present invention.
- FIG. 21B: is a top view of the alternate embodiment of the horn of Figure 10A.
- FIG. 21C: is a bottom view of the alternate embodiment of the horn of Figure 10A.
- FIG. 21D: is a side view of the alternate embodiment of the horn of Figure 10A.
- FIG. 21E: is a section cut through the energy directors of the horn of Figure 10A.
- FIG. 21F: is a front view of a second alternate embodiment of the horn of the present invention.
- FIG. 21G: is a side view of the alternate horn embodiment of Figure 10F.
- FIG. 22A: is a section cut through the anvil and sonotrode of the current invention, shown prior to engaging work pieces, where the engagement of sonotrode energy director plateaus are aligned with and butt against corresponding anvil energy directors plateaus.
- FIG. 22B: shows alignment of the energy director plateaus of the sonotrode with those of the anvil, per the arrangement of Figure 11A.
- FIG. 22C: is a section cut through the anvil and sonotrode of the current invention, shown prior to engaging work pieces, where the engagement of sonotrode energy director plateaus are aligned to interlock with the anvil energy directors plateaus.
- FIG. 22D: shows the interlocking alignment of the energy director plateaus of the sonotrode with those of the anvil, per the arrangement of Figure 11C.
- FIG. 23: shows a prior art energy director utilized on work pieces prior to ultrasonic welding.
- FIG. 23A: shows the prior art energy director of Figure 12 after ultrasonic welding.
- FIG. 24: is an exploded view of a portion of an ultrasonic welding machine comprising a converter, a booster, a sonotrode, and an alternative grid-surfaced anvil that may be used to produce contoured (non-linear) weld patterns.
- FIG. 25: shows a second alternative grid-surfaced anvil that may be used to produce non-linear weld geometries.
- FIG. 26: shows an alternative "dual lane" horn that accomplishes ultrasonic welding and accommodates a blade to cut through the center of the welded materials after welding in completed.

### DETAILED DESCRIPTION OF THE INVENTION

Initial attempts by package machine operators to retrofit existing form-fill-seal machines with the ultrasonic welding technology, was unsuccessful. The volume that could be occupied by the retrofit apparatus was extremely constrained. This constraint was exacerbated by the scenario where a duplex or triplex sealing operation was required at the heat station. A single large horn and anvil being moved to engage each other using conventional actuators were too slow to achieve satisfactory results or outside the realm of single width ultrasonic horn technology. Using two different pairs of horn/anvil combinations was unsatisfactory because of the difficulty in calibrating synchronous engagement of the pairs while the forces generated were too small, and resort to a servo-motor was considered for synchronization, but found to be overly expensive for the application, as it would diminish its marketability.

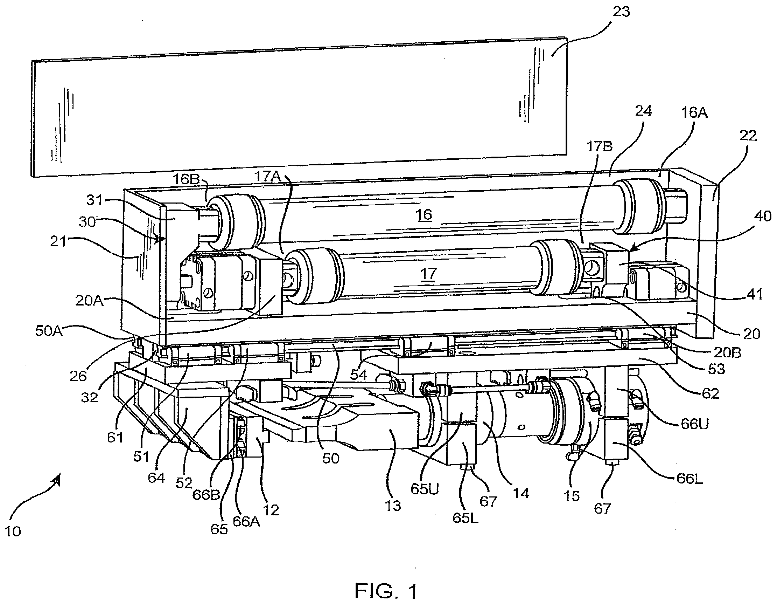

Figure 1 shows a perspective view of a first embodiment of the retrofit kit 10 of the present invention, which elegantly overcame these obstacles, being shown with a housing side panel 23 removed to expose the actuation portion of the invention.

The device utilizes a pair of fluidic mechanical muscles in a specially created dual linear mechanism for simultaneous actuation of both the anvil and the horn/booster/converter stack. Today's "Fluidic Muscle," as it is commonly termed (along with pneumatic artificial muscle), is in part the progeny of an invention by Richard Gaylord. Gaylord, in 1955, received U.S. patent No. 2,844,126 for a "Fluid Actuated Motor System and Stroking Device." In general, a fluidic muscle may be constructed by wrapping a synthetic or natural rubber tube with a woven sheath. This forms an expansible chamber. When a pressurized fluid is applied to the chamber of the fluidic muscle, the chamber expands radially and is accompanied by a corresponding contraction in its length, resulting in linear motion. Metallic or plastic fittings may be secured at both ends to transmit the resultant motion.

The retraction strength of the muscle may be determined by the total strength of the individual fibers forming the woven sheath, while its exertion distance may be determined according to the tightness of the weave, where a looser weave may allow greater bulging, resulting in further twisting of the individual fibers in the weave. Fluidic muscles for use with the current invention may be obtained from the Festo Corporation, located in Mt. Prospect, Illinois (see www.festo.com).

Fluidic muscles are commonly utilized in pairs - one agonist and one antagonist, where the antagonist acts in opposition to the motion of the agonist, thereby mimicking the functioning of muscles within the human body (e.g., an extensor muscle that opens a joint and a flexor muscle to act in opposition to close the joint). However, in this invention, the fluidic muscles operate in a different mode.

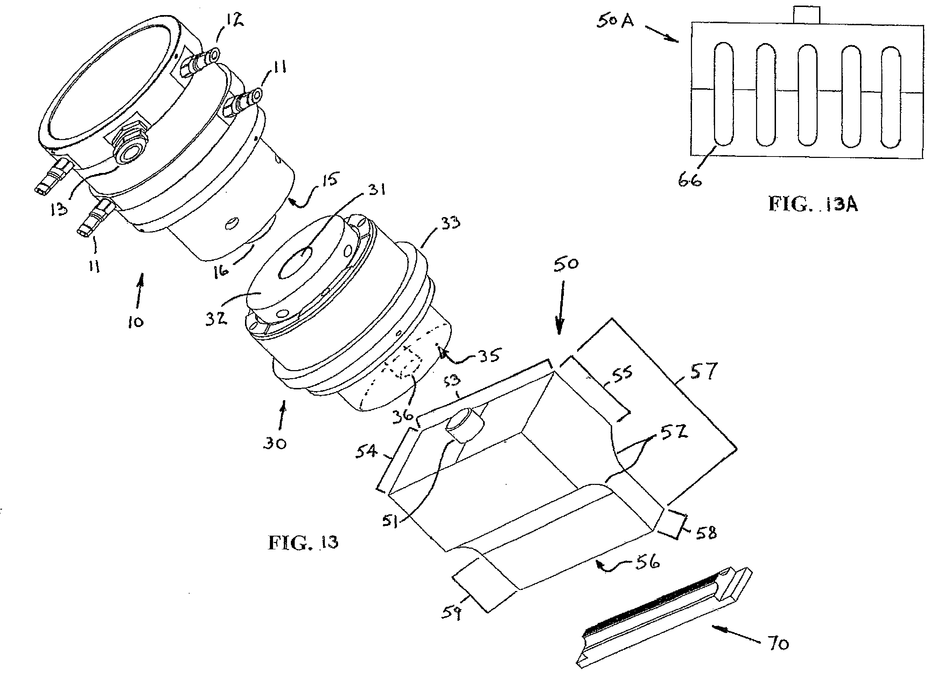

In the simplest possible embodiment, a single fluidic muscle may be used to replicate the linear motion provided by the press 190 in a typical prior art ultrasonic welding machine 100, represented in Figures 13A and 13B. However, in practice, this is not very conducive to the successful retrofitting of many form-fill-seal machines, particularly for a horizontal type machine. In such machines, because the pouch(s) may translate along a conveyor towards a heat station (*see e.g.,* packaging machine 5 in Figure 1 of U.S. Patent No. 5,826,403 to Haley), where one or more heating elements may converge upon the pouch(s) to seal it, it is highly desirable to impart motion to both the anvil and the sonotrode. This dual motion may be set so as to have the sonotrode and anvil generally converge at the mid-plane of the opening to thereat apply pressure and vibration energy necessary for localized heating and melting of the plastic film to seal the opening.

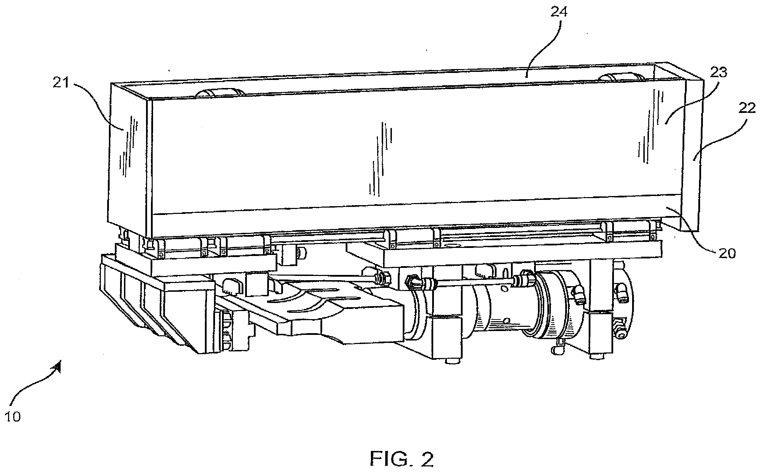

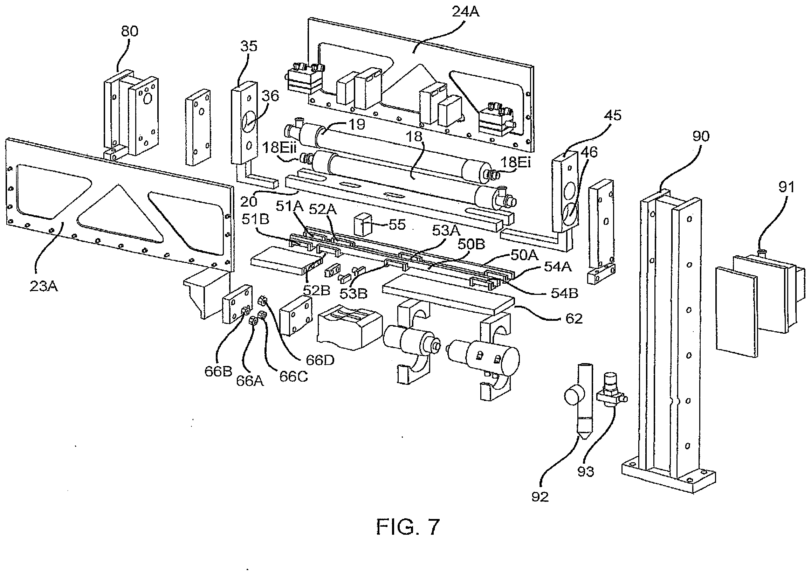

A first embodiment of the present invention is shown by the retrofit kit 10 in Figure 1 (with a side panel 23 of the housing removed), and is also shown in Figure 2. The retrofit kit 10, which may be used in the replacement of one or more heat sealing elements of either a horizontal or a rotary form-fill-seal machine, may include a housing having a base 20, a first end wall 21, a second end wall 22, a first side wall 23, and a second side wall 24. The housing may also comprise a mid-wall 26. Many of these components are common to a later discussed embodiment, for which an exploded view is shown in Figure 7, so reference thereto may be advantageous. The housing side panels 23 and 24 may be used to enclose and protect the fluidic muscles, along with the base 20 and end walls 21 and 22, and in addition, an optional cover (not shown) may be used for those reasons as well. Also, side panels 23 and 24 may serve to add structural rigidity to the housing; however, the panels 23 and 24 are not required for supporting the functionality of the mechanism, as will be seen hereinafter.

The base 20 may have a first opening 20A and a second opening 20B, both of which may be slotted openings. A first mounting member 30 may have a portion being disposed part-way through the first opening 20A in base 20. In one embodiment, first mounting member 30 may preferably be "L"-shaped, and may have one leg 31 of the "L" protruding up through the opening 20A in base 20, and the other leg 32 may be disposed so as to generally parallel the base 20 of the housing. The first mounting member 30 may therefore be slidable within the slotted opening 20A of the base 20 of the housing. A second mounting member 40 may be similarly constructed with first and second legs 41 and 42, and be correspondingly disposed so as to be slidable within the second opening 20B in the base. The ends of the second legs 32 and 42 of the "L"-shaped mounting members may face each other within the kit assembly.

The second legs 32 and 42 of the "L"-shaped mounting members 30 and 40 may each be attached to at least one respective bearing carriage, which may be slidable upon a linear rail. In a preferred embodiment, a linear rail with four bearing carriages being slidable thereon may be used. Linear rails and bearing carriages are commercially available, and may be obtained from PBC Linear, in Roscoe, Illinois (see www.pbclinear.com/Pages/Linear-Components, the disclosures of which are incorporated herein by reference). A linear rail 50 may be secured to the bottom of base 20, and may have bearing carriages 51, 52, 53, and 54 being slidable thereon, as seen in Figure 1. Depending upon the linear rail selected, and the method utilized for attachment to the housing base 20, it is possible for the second leg 32 of the "L"-shaped mounting member 30 to attach directly to the bearing carriages 51 and 52, with the second leg 42 of the "L"-shaped mounting member 40 attaching directly to the bearing carriages 53 and 54.

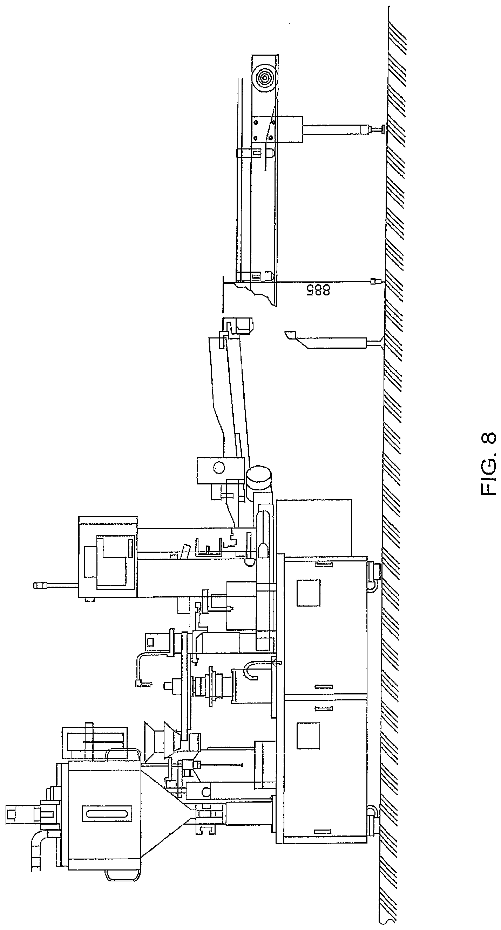

Alternatively, and as may be seen in Figure 8, a split linear rail 50A and 50B may be used, with pairs of bearing carriages 51A, 51B, 52A, 52B, 53A, 53B, 54A, and 54B being slidable upon the rail pair 50A/50B, and with carriages 51A, 51B, 52A, and 52B being secured to a mounting block 61, and with carriages 53A, 53B, 54A, and 54B being secured to a mounting block 62. As seen in Figure 1, the opening formed between the split rails 50A/50B and bearing carriage pairs may serve to permit attachment of the second leg 32 of the first "L"-shaped member 30 to mounting block 61, and permit attachment of the second leg 42 of the second "L"-shaped member 40 to mounting block 62. (Note - attachment of any of the housing components or other parts described herein may be accomplished using a suitable adhesive or any mechanical fasteners know in the art to be appropriate for the materials used, which may be wood, metal, or plastic). With the length of the linear split rails 50A/50B selected to span the slotted openings 20A and 20B in base 20, the first mounting member 30 may thereby be slidable with respect to the first end of the housing, being proximate to the housing end wall 21, within slotted opening 20A. The second mounting member 40 may thereby be slidable with respect to the second end of the housing, being proximate to the housing end wall 22, within slotted opening 20B.

An advanced anvil 12 may be secured to the mounting block 61. In a preferred embodiment, an angled gusset assembly 64 may first be secured to the mounting block 61, and then the anvil 12 may be secured to the gusset assembly 64. To accommodate the build-up of tolerances and to generally permit adjustments to the precise static positioning of the anvil, the importance of which is discussed hereinafter, a base plate 65 may be located between the gusset assembly 64 and the anvil 12, and leveling feet may be positioned between the base plate 65 and the anvil 12.

An advanced sonotrode 13 may form part of a stack that also includes a booster 14 and a converter 15. The advanced anvil 12 and the advanced sonotrode 13 are described in detail, later in the specification. The stack may be secured to the mounting block 62 using upper and lower clamp blocks 65U/65L that secure the booster, and upper and lower clamp blocks 66U/66L that secure the converter. The upper clamp blocks 65U and 66U may each be fixedly secured to the mounting block 62, and the lower clamp blocks 65L and 66L may each be releasably secured to the corresponding upper clamp blocks using set screws 67, to releasably secure the stack to the mounting block 62.

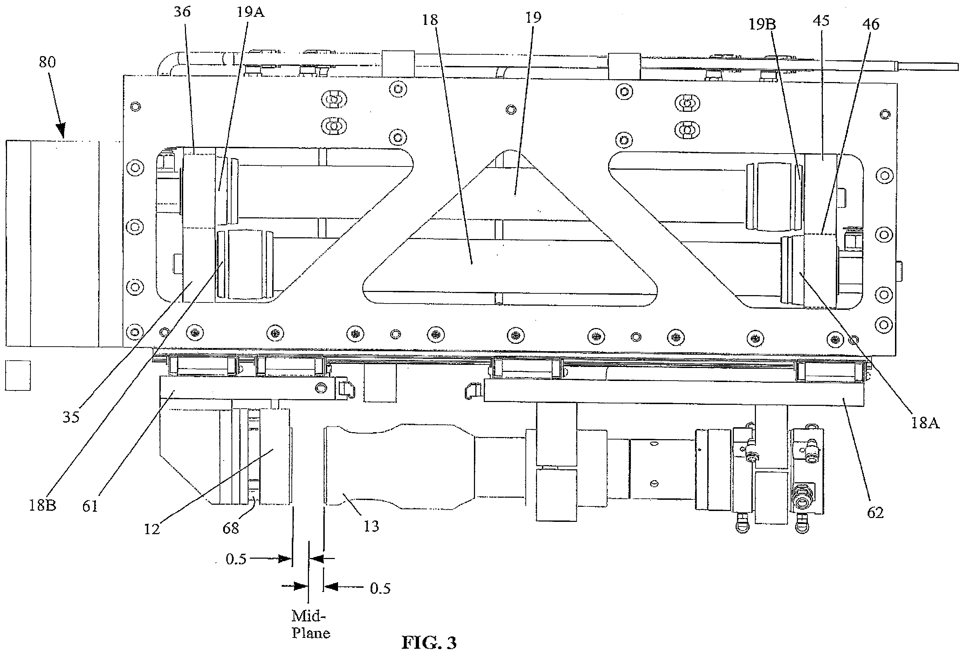

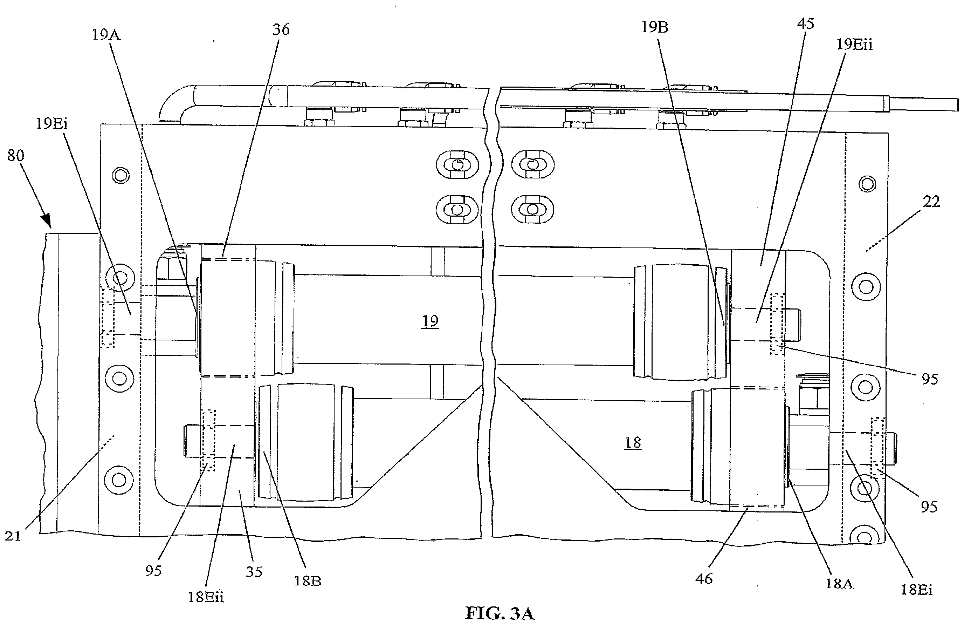

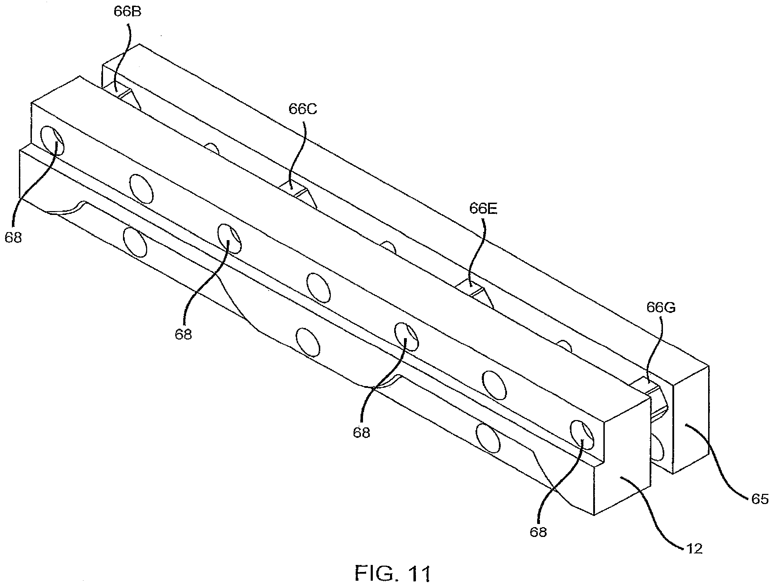

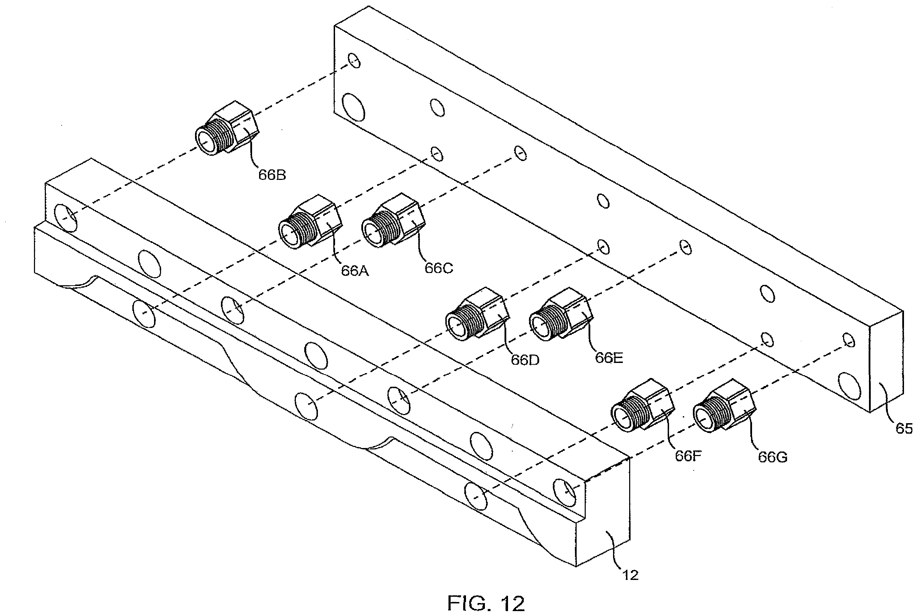

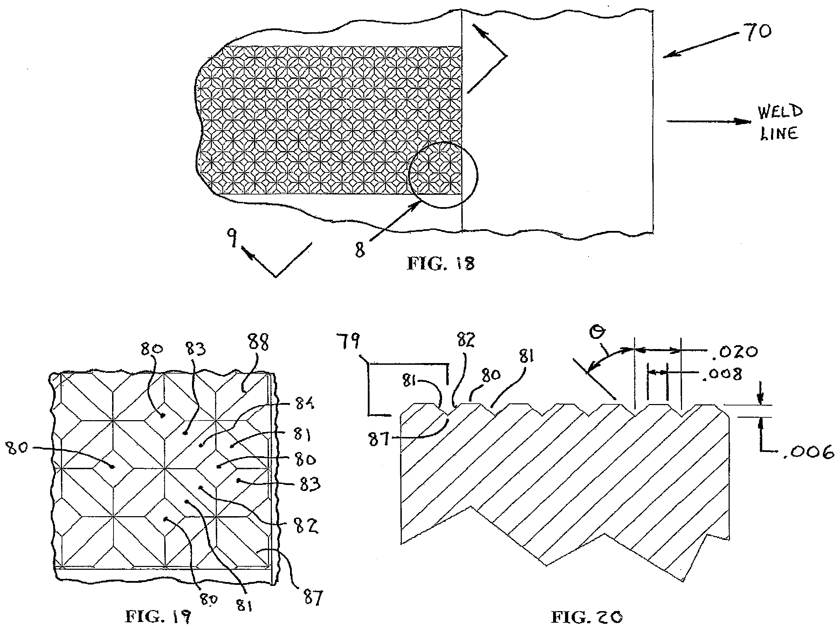

One embodiment of the leveling feet, base, and anvil is shown in an exploded view in Figure 12. In the embodiment of Figure 12, leveling feet 66A, 66B, 66C, 66D, 66E, 66F, and 66G are shown prior to being threadably engaged within corresponding threaded holes in the anvil 12, after which the anvil and mounting feet may be secured to the base and to the gusset assembly 64 using screws 68, as seen in Figure 11 and Figure 3. The degree to which each of the mounting feet 66A-66G are threadably engaged therein may be adjusted - inward and outward - in order to provide carefully controlled and adequate support across the length of the anvil 13, so that its series of energy director grids, as shown in Figures 18-19, may properly engage the corresponding series of energy director grids of the advanced sonotrode 13. A contact sheet may be utilized between the energy director grids of the sonotrode and the anvil, during their engagement, which is discussed hereinafter, to determine if the engagement is proper, with adjustments to the leveling feet being made to achieve uniform contact therebetween.

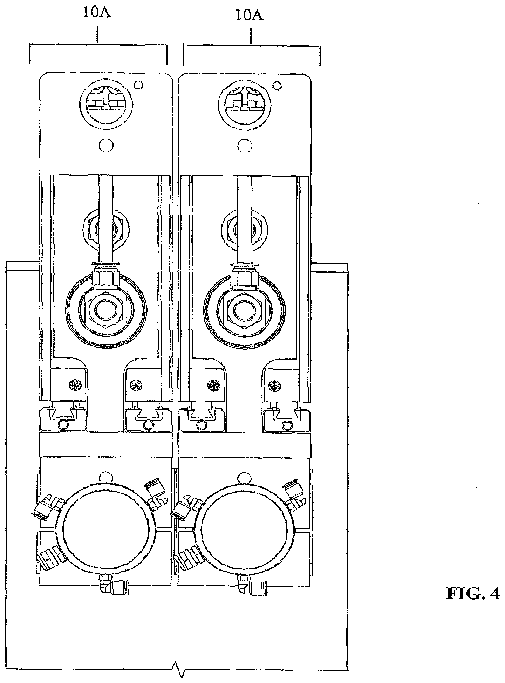

With this arrangement of Figure 1, a first fluidic muscle 16 may have a first end 16A being fixed to the second end wall 22 of the housing, and a second end 16B of fluidic muscle 16 may be fixed to the first leg 31 of "L"-shaped mounting member 30. A second fluidic muscle 17 may have a first end 17A being fixed to the housing mid-wall 26 of the housing, and a second end 17B of fluidic muscle 17 may be fixed to the first leg 41 of "L"-shaped mounting member 40. The fluidic muscles 16 and 17 may preferably be attached as described to also be disposed in-line, relative to the linear rail 50 and to the anvil 12 and the stack with sonotrode 13. This in-line arrangement creates an assembly that possesses a very narrow, though elongated shape, which facilitates installation of the retrofit kit 10 into a space constrained envelope currently occupied by the heat seal station of certain form-fill-seal machines (see generally Figures 3 and 4, which illustrate installation of a second retrofit kit embodiment 10A of the present invention onto such a machine).

With the retrofit kit 10 being assembled as described above, and with pneumatic/hydraulic tubes being appropriately installed to port pressure to the fluidic muscles 16 and 17, pressurizing of the first and second fluidic muscles may cause translation of the first muscle mounting member 30 and translation of the second muscle mounting member 40, with the translation being generally simultaneous and being relative to the linear rail, and with it causing convergence of the two mounting member so as to cause engagement of a surface of the anvil 12 with a surface of the sonotrode 13. A controller may be used to sequence porting of pneumatic/hydraulic pressure to the fluidic muscles and corresponding depressurizing, with the pulsing of electric power to the stack to cause the mechanical vibrations that creates friction between the "work piece" materials (the sides of the open end of the pouch) to generate heat to melt the contact area therebetween. Depressurizing of the first and second fluidic muscles 16 and 17 may cause reverse-translation of the first and second muscle mounting members 30 and 40 relative to the linear rail pair 50A/50B to cause disengagement of (or separation between) the engaging surface of the anvil 12 and the engaging surface of said sonotrode 13, after an appropriate weld time has elapsed.

The translation of the two mounting members 30 and 40 need not be simultaneous, but it is important that the engaging surface of the anvil 12 and the engaging surface of the sonotrode 13 meet at a prescribed "mid-plane," where the pouch is positioned. As seen in Fig 7, a mechanical stop 55 may be used to institute a travel limiting set point so that when the fluidic muscles are activated, the anvil and sonotrode will suitably mesh in the middle. Typically the anvil side reaches the mid-plane first, since there is less mass to move, and its travel will thereat be limited by contact with the mechanical stop 55. The horn side will thereafter come into contact with the anvil in the middle, as set by the adjustable mechanical stop 55. Without the adjustments provided by the mechanical stop 55, any differential in reaching the pouch may otherwise serve to cause deflection of the pouch, resulting in a distorted weld line, and an aesthetically unappealing package. Having two different sized fluidic muscles 16 and 17 may require some additional adjustment to the arrangement to coordinate the arrival times of the anvil 12 and sonotrode 13 at the plane where the pouch is to be sealed. If the first and second fluidic muscles are the same size, certain efficiencies may be obtained.

A second embodiment 10A of the retrofit kit of the current invention is shown mounted to a horizontal form-fill-seal machine in Figure 3 and 4. This installation of the kit 10A is shown enlarged in Figures 3A, and has its component parts shown in the exploded view of Figure 7. The kit 10A may make use of two identical fluidic muscles 18 and 19, and may therefore be capable of simultaneous and equal translation amounts for both the anvil 12 and sonotrode 13, largely eliminating the need for adjustments due to different travel distances or times. In Figure 3, it may be seen that the engaging surface of the anvil 12 and the corresponding engaging surface of the sonotrode 13 may each be located, prior to pressurization of the fluidic muscles and the associated translation, approximately 0.5 inches away from the mid-plane at which the pouch to be sealed may ideally be positioned. Utilizing the same fluidic muscle 19 for translation of the sonotrode 13 on the slidably mounted block 62, as the fluidic muscle 18 for translation of the anvil 12 on the slidably mounted block 61, may also result in equal speeds of translation.

Inline positioning of the same fluidic muscles 18/19 may be accomplished, as seen in Figures 3A and 7 for this second embodiment, by providing a clearance hole 36 in the first mounting member 35 to permit sliding of the first mounting member relative to the fluidic muscle 19 without any contact occurring therebetween, and by providing a clearance hole 46 in the second mounting member 45 to permit sliding of the second mounting member 45 relative to the fluidic muscle 18 without any contact occurring therebetween. Many other aspects of retrofit kit 10A may otherwise be similarly constructed to retrofit kit 10. The first end 18A of the fluidic muscle 18 may be secured to the housing, albeit by passing through the oversized orifice 46 in the second mounting member 45, and possibly being with the use of an extended end fitting 18Ei on the fluidic muscle, with the fitting having a threaded portion thereon to which a nut 95 may torqued to secure it to the housing end wall 22. The second end 18B of the fluidic muscle 18 may also have an extended end fitting 18Eii with a threaded portion thereon to which a nut 95 may be torqued to secure it to the first mounting member 35. Also, the first end 19A of the second fluidic muscle 19 may be secured to the housing, albeit by passing through an oversized orifice 36 in said first mounting member 35, and possibly being with the use of extended end fitting 19Ei on the fluidic muscle, with the fitting having a threaded portion thereon to which a nut 95 may torqued to secure it to the housing end wall 21. The second end 19B of the fluidic muscle 19 may also have an extended end fitting 19Eii with a threaded portion thereon to which a nut 95 may be torqued to secure it to the first mounting member 45.

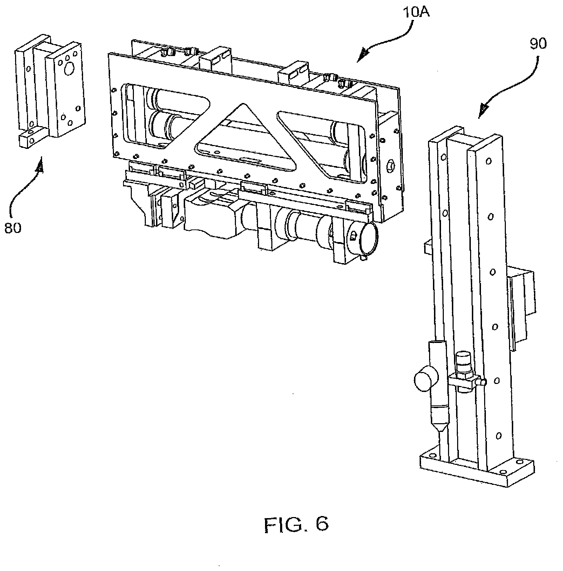

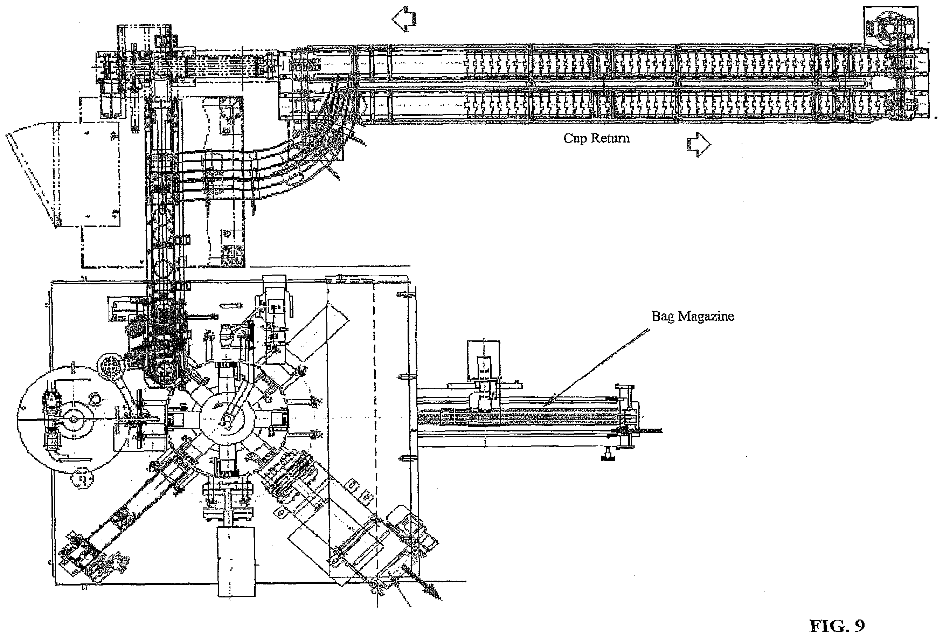

Retrofit of the advanced technology ultrasonic anvil and sonotrode onto existing form-fill-seal machines may require the removal of one or more heat sealing stations and any associated support brackets originally used to secure the heat station to a frame of the machine. The retrofit kit 10 or kit 10A may be supplied for installation thereon. Because of differences in the frame and other features of certain machines produced by various manufacturers, a horizontal machine spacer assembly 80 (Figures 3, 3A, 6, and 7) may be needed to properly position the kit so that the anvil and sonotrode are both properly displaced on opposite sides of the theoretical pouch mid-plane, as the pouches advance along the conveyor. Also, for a rotary form-fill-seal machine, such as the one shown in Figures 8 and 9, proper installation of the kit may also require support of the outward radially located end of the kit, through the use of a rotary machine column assembly 90.

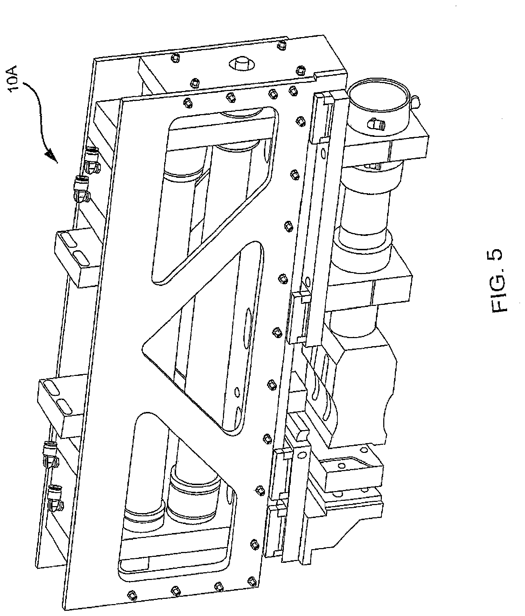

Each of the kits, as well as the horizontal machine spacer assembly 80 or the rotary machine column assembly 90, may require drilling of mounting holes into the frame of the machine that is to be retrofitted. As seen in Figure 5, these holes may be located in one of the housing end walls 21/22 as pilot holes, which may then be used as a template for drilling common full size holes in both the kit and the machine's frame. Thereafter, the kit may be secured to the frame of either a horizontal or a rotary form-fill-seal machine using any suitable fastening means known to one skilled in the art, including, but not limited to, nuts, lock washers, and bolts.

Ultrasonic welding is a process in which one or more pieces of material, very often being plastic material, may be fused together without adhesives, mechanical fasteners, or the direct application of heat (which tends to distort larger areas that need to be welded), by instead subjecting the materials to high frequency, low amplitude vibrations. The material to be welded may have an area where the material or materials are lapped to form a seam that is sandwiched between what is typically a fixed or moveable anvil and a fixed or moveable sonotrode.

As stated in the background, ultrasonic welding may be utilized for fusing metal parts, however, it is commonly used for the joining of plastic work pieces. The word "plastic" can refer, in the mechanical arts, to the stress/strain relationship where strain has exceeded a material-specific point at which further deformation results in a permanent change in shape, which is distinguishable from the technical description of the material "plastic." Plastic material usually comprises polymers with a high molecular mass, and can be combined with other components to enhance the performance of the material for specific applications.

Plastic materials fall into one of two categories - thermoplastic (or thermo-softening plastic) and thermosetting. A thermosetting polymer can be melted once only to take a certain shape, after which it cures irreversibly. Conversely, thermoplastics may be repeatedly softened or even melted upon application of sufficient heat. Thermoplastic materials may be further subdivided, based upon the structure of the polymer molecule, which determines its melting and welding characteristics, into amorphous and semi-crystalline thermoplastics. Some examples of amorphous thermoplastics are: acrylonitrile butadiene styrene (ABS), acrylic, polyvinylchloride (PVC), and polycarbonate (or Lexan™). Some examples of semi-crystalline thermoplastic materials include: polyethylene plastic resin (PE), polypropylene (PP), polyamide (PA), and polyester (linear ester plastics). The amorphous thermoplastic materials possess a randomly ordered molecular structure that is without a distinctive melting point, and therefore soften gradually to become rubbery before liquefying, and also solidify gradually, with less of a tendency to warp or experience mold shrinkage. Conversely, semi-crystalline thermoplastics have a discrete melting point, and require a high level of heat energy to break down the crystalline structure, at which melting occurs. The semi-crystalline thermoplastic materials, unlike amorphous polymers, remain solid until reaching its discrete melting temperature, after which they melt quickly, and also solidify quickly.

Ultrasonic welding may be performed for similar materials, and sometimes even dissimilar materials, but to form a molecular bond for dissimilar materials generally requires chemical compatibility, meaning that the melt temperatures are roughly within 40 degrees Celsius and have similar molecular structure. Ultrasonic welding consists of mechanical vibrations causing friction between work piece materials that generates heat to melt the contact area therebetween, which results in the formation, upon cooling, of a homogenous molecular bond. The process requires a controlled amount of pressure to permit the vibrations to cause the friction heating, with that pressure being applied between the sonotrode and the anvil, which is the focal point of the current invention.

The anvil may be secured to an appropriate fixture, while the sonotrode (otherwise known as a "horn" within the relevant art) comprises part of the critical array of equipment in ultrasonic welding machines known as the "stack." The stack consists of a converter (also known as a transducer, but that term sometimes may also imply use as a sensor/detector), an optional booster, and the sonotrode. A converter is a device that converts one type of energy into another type of energy. Generally, the converter in the stack will either be a magnetostrictive transducer or a piezoelectric transducer. A magnetostrictive transducer uses electrical power to generate an electro-magnetic field that may cause the magnetostrictive material to vibrate. With a piezoelectric transducer, which is commonly used today, the supplied electrical power is directly converted, and more efficiently converted, into longitudinal vibrations. A piezoelectric transducer consists of a number of piezoelectric ceramic discs that may be sandwiched between two metal blocks, termed front driver and back driver. Between each of the discs there is a thin metal plate, which forms the electrode. A sinusoidal electrical signal - typically 50 or 60 Hertz AC line current at 120-240 volts - is supplied to the generator or power supply. The generator or power supply then delivers a high voltage signal generally between 15,000 and 70000 hertz to the converter or transducer. The ceramic discs will expand and contract, producing an axial, peak-to-peak vibratory movement of generally between 12 to 25 µm, and usually being at a frequency of either 20,000 Hertz or 35,000 Hertz, but with an often used frequency range of 15 kHz to 70 kHz. So, the transducer converts high frequency electrical energy to high frequency mechanical motion.

The booster, being used as a mounting point for the stack, is also utilized to suitably alter the amplitude of the vibrations created by the transducer prior to being transmitted to the horn. The booster may either decrease or increase the amplitude of the vibrations, with such changes being known in ratio form as the "gain." A one to three (1:3.0) booster triples the amplitude of the vibrations produced by the transducer, while a one to 0.5 (1:0.5) booster decreases the vibration amplitude by one-half. Boosters may be substituted in a stack to alter the gain in order to be suitable for a particular operation, as differences in the gain may be needed for different material types, and the type of work that is to be performed.

The horn is the specially designed part of the stack that supplies the mechanical energy to the work pieces. It is typically made of aluminum, steel, or titanium. Aluminum tends to be used most often for low volume applications, as aluminum horns wear more quickly than ones made of titanium or steel, although some horns may be manufactured with a special hardened tip to resist local wear. Aluminum horns are also sometimes used when more rapid heat dissipation is needed. Additionally, multielement composite horns may be used to weld parts.

The length of the horn is a key aspect of its design. To ensure that the maximum vibration amplitude in the horn is in the longitudinal direction (away from the booster and toward the work pieces and anvil), the horn may contain a series of slotted openings 66 (see Figure 13A). Also, the horn, like the booster, is a tuned component. Therefore, the wavelength of the vibrations and the length of the horn must be coordinated. In general, the length must be set to be close to an integer multiple of one-half of the wavelength being propagated through the material of the horn. Therefore the horn may be sized to be a half wavelength, a full wavelength, or multiple wavelengths in length. This arrangement ensures that sufficient amplitude will be delivered at the tip to cause adequate vibrations, in the form of expansion and contraction of the horn at its tip, to create the frictional heating necessary for melting of the work pieces. This amplitude, for most horns, will typically be in the range of 30-120 µm.

All three elements of the stack - converter, booster, and sonotrode - are tuned to resonate at the same frequency, being the aforementioned ultrasonic frequencies. These rapid and low-amplitude frequencies, which are above the audible range, may be applied in a small welding zone to cause local melting of the thermoplastic material, due to absorption of the vibration energy. The application of ultrasonic vibrations may be for a predetermined amount of time, which is known as the weld time, or energy, which is known as the weld energy. Typically, the welding process generally requires less than one second, for fusing of the portion of the two parts on the joining line where the sonic energy is applied. To achieve adequate transmission of the vibrations from the horn through the work pieces, pressure is applied thereto by an anvil supported in a fixture, and through the use of a press.

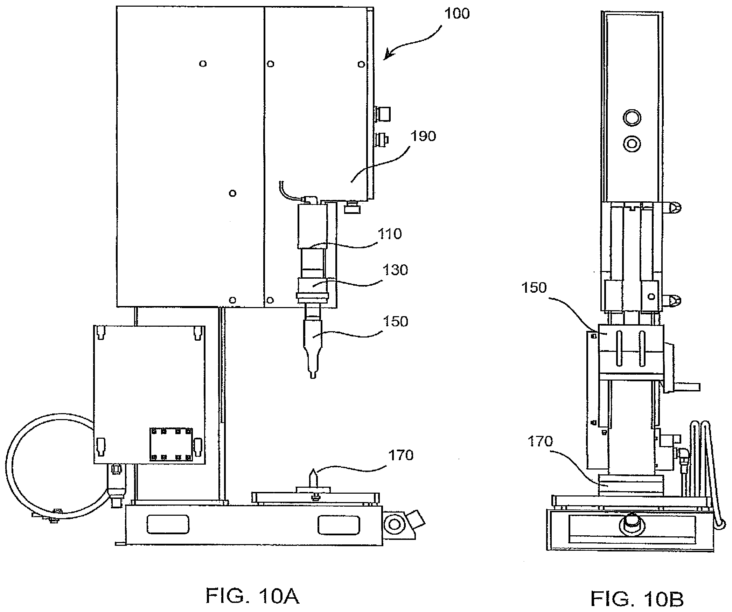

Figures 10A and 10B show an ultrasonic welding machine 100 utilizing the arrangement of a converter, a booster, press, and a sonotrode/anvil of the current invention. The booster 30 is often the means by which the stack is secured to the press 110, with it usually being secured to a flange or some other portion of the press 110. The converter 10 may be attached to one side of the booster 30, while the sonotrode (horn) 50 may be attached to the other side of the converter to be in proximity to the anvil 70. The material(s) that are to be fused together may be located upon anvil 70. A pneumatic system within the press 110 may cause the flange mounted stack to be translated downward so as to contact and apply pressure through the material(s) against anvil 70, during which time ultrasonic vibrations are emitted by the converter and resonate through the booster and sonotrode.

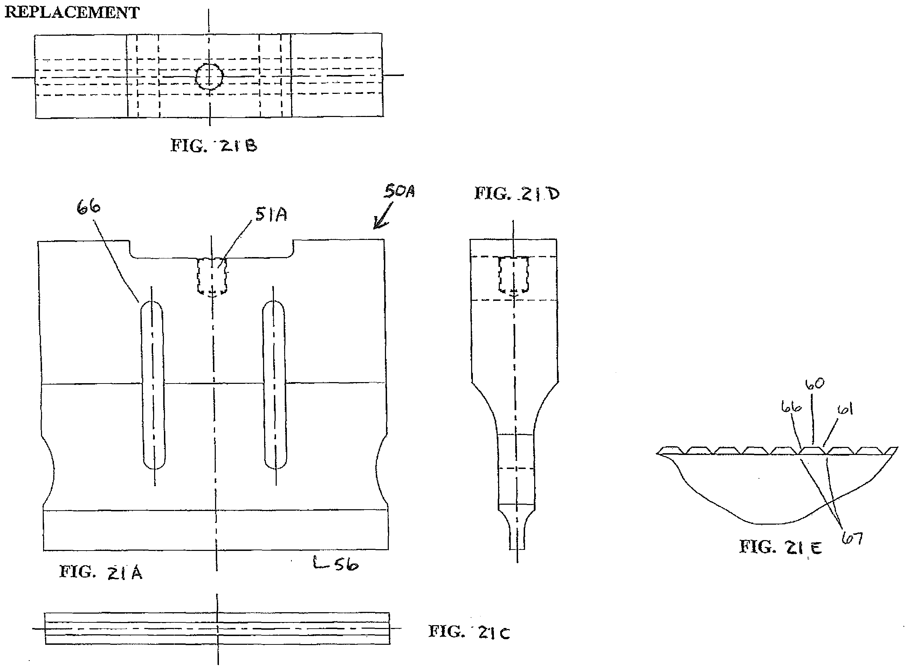

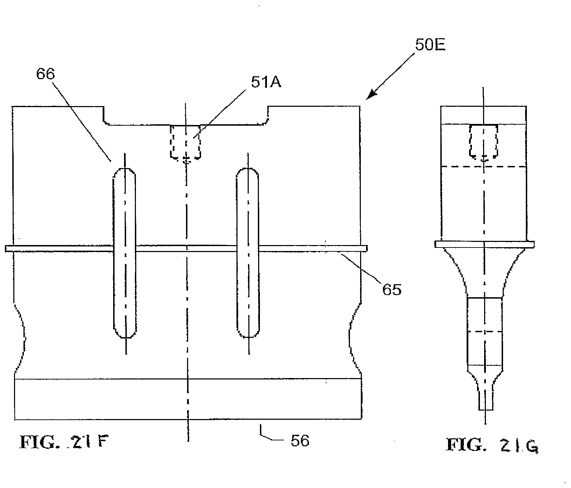

Figure 13 shows a first embodiment of the present invention, where the stack includes a converter 10, a booster 30, a sonotrode 50, and an anvil 70 that may be used to weld straight patterns. The converter 10 may be comprised of electrical connectors 11, 12, and 13. The converter 10 may also comprise a flat surface 15 from which protrudes a cylindrical connection means 16 that may be received in a corresponding cylindrical opening 31 in flat surface 32 of booster 30, for attachment of the converter to the booster. The booster 30 may have a flange 33 for use in securing the booster to a press. The booster may have a second flat surface 35 with a cylindrical opening 36 therein, to receive a corresponding cylindrical protrusion 51 of the horn 50. Alternatively, the booster may have a cylindrical protrusion that is received by a cylindrical recess 51A, as seen for the alternative sonotrode 50A of Figure 21A. The cylindrical protrusion 51 of the horn 50 may protrude from a rectangular block, having a length 53, a width 54, and a depth 55. The rectangular block may transition, at the depth 55, into a narrow rectangular block having a width 58, and being of sufficient length 59, inclusive of the filleted transition areas 52, to create a horn of total length 57. The horn 50 may have a contact surface 56 with a width 58 and length 53 designed for contact with anvil 70.

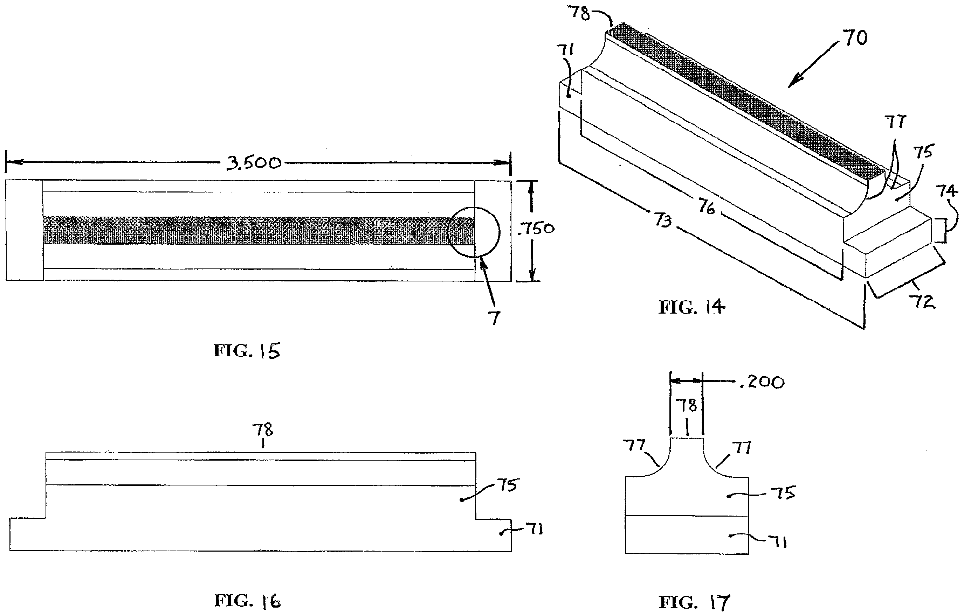

The anvil 70, which may be seen in figures 14-20, is configured to be supported in a fixture and be engaged by the surface 56 of sonotrode 50. Anvil 70 may be comprised of a mounting platform 71 having a width 72, length 73, and depth 74. The mounting platform 71 may be used to retain the anvil 70 in the mounting fixture. Protruding away from the mounting platform 71 may be a pedestal portion 75 that shares the same width 72 as the mounting platform, but may have a length 76 that may be shorter than, and be approximately centered upon, the length 73 of the mounting platform 71. The pedestal 75 may narrow, by a pair of radiused surfaces 77, into the engagement surface 78.

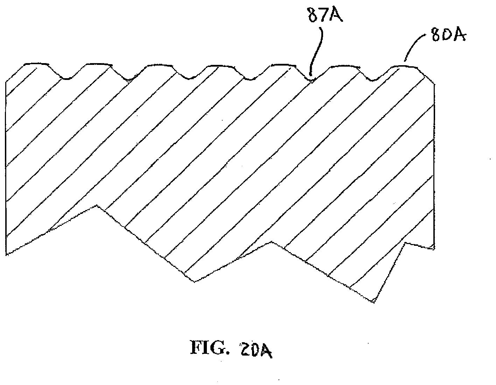

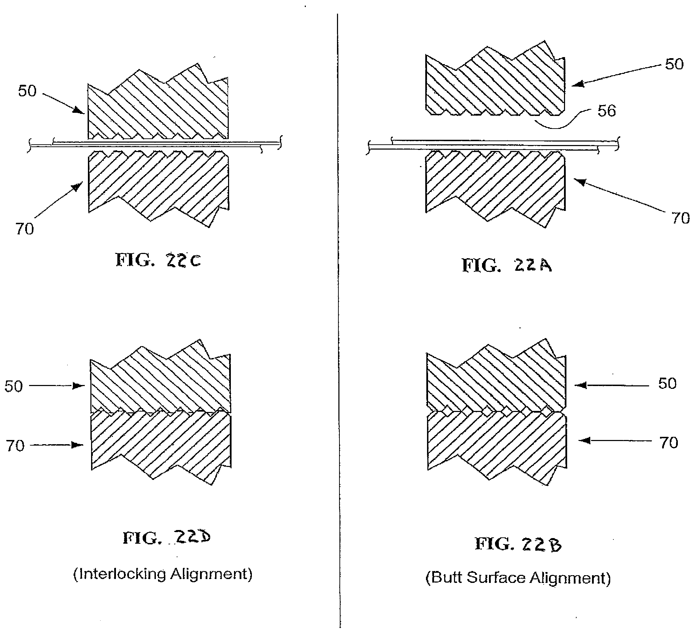

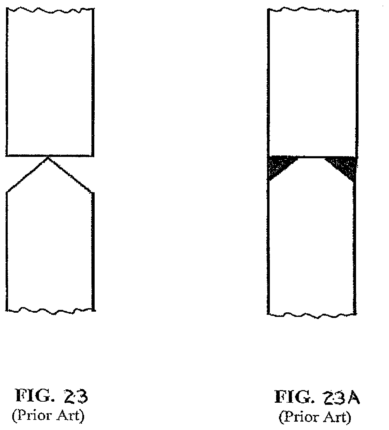

As seen in the enlarged detail of the engagement surface 78 in Figures 18 and 19, and the section cut of Figure 20, the engagement surface 78 of the anvil 70 comprises a specially constructed interface that is designed for receiving the vibrations emitted by the sonotrode 50 to create a narrower ultrasonic weld region which provides greater weld strength than is created by two flat continuous engagement surfaces. The engagement surface 78 comprises a plurality of specially crafted energy directors 79, but are not energy directors in the plain meaning as utilized within the relevant art. An energy director within the prior art is where the work pieces themselves - meaning the parts to be ultrasonically welded - are created such that one part is flat and the other part comes to a sharp point (Figure 23). In the case of the prior art energy director, with an example being shown by U.S. Patent No. 6,066,216 to Ruppel, the pointed work piece was to provide a focal point for vibrations to produce frictional heat, and thereby provide a specific volume of melted material to join the two parts (Figure 23A). With the invention herein, the anvil and sonotrode may comprise a plurality of specially constructed energy directors 79 that may be arranged into a coordinated three-dimensional grid pattern, being coordinated between the sonotrode and anvil, to thereby selectively increase the total surface area of the anvil that may be capable of distributing vibrations in a three-dimensional contact pattern of vibration-transmissive contact with the sonotrode, and which may also cause a minimal amount of deformation of the work pieces during the initial horn-to-anvil engagement (Figure 22). The deformation may preferably be limited to a slight amount, and therefore be limited to remain within the elastic range of the material. The increase in surface area of contact may depend upon the width of the plateau surfaces used, as described hereinafter. The three-dimensional contact pattern may be ascertained by reference to Figure 19, and Figures 20 and 22.

The energy directors 79 of the anvil 70 may be regularly spaced apart from each other, as seen in Figure 19. The energy directors 79 may preferably be spaced apart in a first direction that may parallel the weld line, and be similarly spaced apart in a second direction away from, or orthogonal to, the weld line to form the grid pattern. In a first embodiment, each of the energy directors 79 may comprise a plateau surface 80 that may be formed by a first angled side surface 81, a second angled side surface 82, a third angled side surface 83, and a fourth angled side surface 84, where the plateau surfaces 80 may comprise a rectangular-shape that may be oriented at a 45 degree angle to the weld line. At the meeting of adjacent side surfaces 81 and 82 of adjacent plateau surfaces 80, there may be a valley bottom or trough line 87 that may be oriented at a minus 45 degree angle with respect to the weld line, and at the meeting of the adjacent side surfaces 83 and 84 of adjacent plateau surface 80, there may be a trough line 88 that may be oriented at a plus 45 degree angle with respect to the weld line.

The rectangular-shaped plateau surface 80 lends itself very well to two different types of repetitive patterned engagement with the sonotrode described hereinafter; however, other geometric plateau shapes may also be utilized, which would naturally alter the side-surface arrangement. Also, the rectangular-shaped plateau surfaces 80 may each be generally flat, although contoured plateau surfaces 80A may alternatively be utilized, along with a filleted or radiused trough 87A, as seen in Figure 20A.

In a first embodiment, seen in Figure 20, the energy directors 79 of the anvil 70 may have a span therebetween of approximately 0.020 inches, and have a depth from the plateau surface 80 to the troughs 87 or 88 of approximately 0.006 inches. The angled side surfaces may each be at an angle θ, that may be different for various configurations, but in the first embodiment, angled side surfaces 81, 82, 83, and 84 may be oriented such that the angle θ is a 45 degree angle, which, when resolved geometrically, would result in the width of the plateau surfaces 80 being 0.008 inches. Since the dimensions of the energy directors 79 may not necessarily be very large with respect to the material thicknesses being welded, the amount of deformation, discussed earlier, may similarly not be very large, and thus does not pose an issue as to tearing of the material of the work pieces, or even necessarily, issues relating to plastic deformation.

The sonotrode 50 may have corresponding energy directors, as seen in Figures 21A-21E, and may similarly include plateau surfaces 60, as well as side surfaces 61, 62, 63, and 64. The improved sonotrode 50 and anvil 70 may be constructed to have engagement therebetween of energy directors comprising a greater surface area of contact between corresponding plateau surfaces and valleys, than the traditional flat surfaced sonotrode contacting a flat surfaced anvil. This increased surface area of contact, which may be seen from the engagement of the sonotrode and anvil with the work-pieces in Figure 22 to cause minor elastic deformation prior to application of ultrasonic vibrations, results in more durable ultrasonic welding of two work pieces.

In one embodiment of welding being accomplished between the sonotrode and anvil of the present invention, alignment of the anvil and sonotrode, which is critical in each case, consists of having the energy director grids aligned so that the plateau surfaces of the sonotrode directly butt against plateau surfaces of the anvil (Figure 22B). This focuses the vibration energy into a select grid pattern, so that when work pieces are inserted between the sonotrode and anvil (Figure 22A), ultrasonic welding is achieved more rapidly and efficiently across the entire weld. The butt-surface alignment method is favorably used on thicker work pieces and thinner non-foil applications.

In a second embodiment of welding according to the present invention, which is advantageous for thinner work pieces, dramatically improved weld durability is achieved by utilizing alignment between the energy director grids whereby the side surfaces of the sonotrode plateaus interlock with the side surfaces of the anvil plateaus (Figure 22D) in a repeating 3-dimensional pattern, which may include minor elastic deformation of the work pieces. When the work pieces are inserted between the sonotrode and anvil (Figure 22C), a three-dimensional weld results. The three-dimensional weld exhibits significantly improved durability over that of conventional ultrasonic welds. Depending on the length of the plateau surface utilized on both the anvil and sonotrode, the surface area of contact may be greater or less than the surface area of contact for flat engagement surfaces of the prior art welding machines. Even where the surface area of contact is somewhat less than that of the prior art flat engagement surfaces, increased durability of the weld results. However, where a relatively small plateau surface is used, perhaps being somewhat smaller than the one illustrated in Figures 20 and 22D, the surface area of contact would be significantly larger, and may therefore serve to further reduce the weld times and may also serve to further improve the weld quality/durability. The limiting case would be where the length of the plateau approaches zero, so that there would essentially be interlocking pyramid shapes, and for the sides being at a 45 degree slope, the result would be an increase in surface area of contact of approximately 41.4 percent (The mathematical formula for the surface area of a pyramid being ½ x Perimeter x [Side Length] x [Base Area]). Another means of describing and/or visualizing the energy director grids of the present invention, as seen in Figures 19-20 and 21E, is as a pyramid frustum.

Since the alignment of the anvil and sonotrode in the interlocking alignment method is crucial for achieving the results offered herein, the horn 50E may preferably be designed to include a peripheral flange 65 at roughly the mid-plane of the horn. The flange 65 may permit mounting of the horn in closer proximity to the contact surface 56, rather than relying solely upon the mounting connection with the booster, or booster and converter. The need for this type of flanged horn for help with alignment is very pronounced for welding of very thin materials.

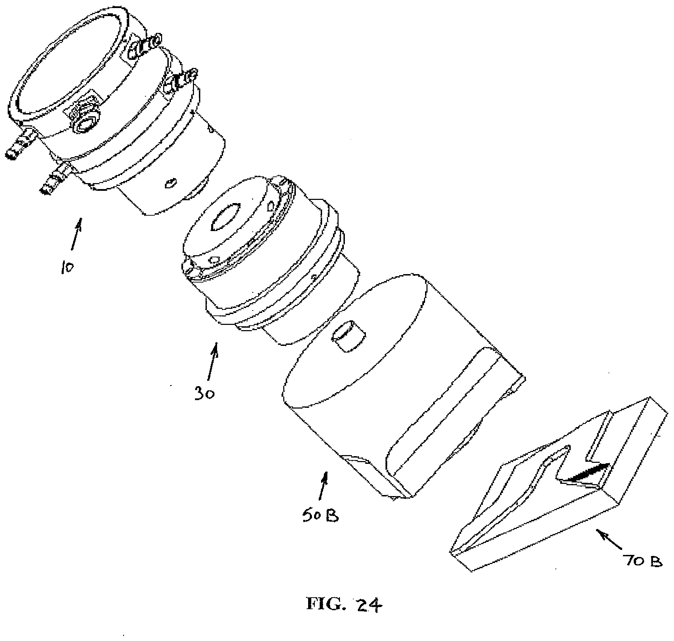

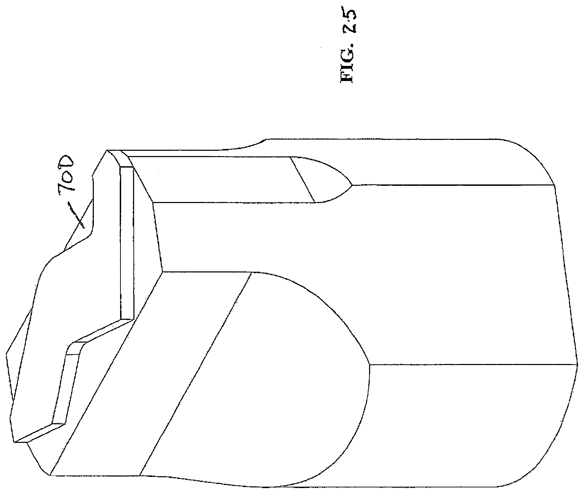

Figure 24 illustrates the usage of a sonotrode 50B and anvil 70B utilizing the energy directors of the present invention, to create an ultrasonic weld that does not follow a straight-line to create a linear weld in the form of an elongated weld having a rectangular-shaped periphery, and alternatively creates complex, nonlinear weld geometry upon a package to seal the package. Figure 25 shows anvil 70D, which is capable of being used in the formation of yet another complex curved weld. These non-linear anvil/sonotrode combinations may be utilized to weld materials having a complex irregularly-shaped periphery, rather than the simple linear weld that is typically used, such as for a package of potato chips available at most vending machines. Use of these anvil/horn energy director grid combinations also allows for welding of materials to produce durable 3-dimensional geometries.

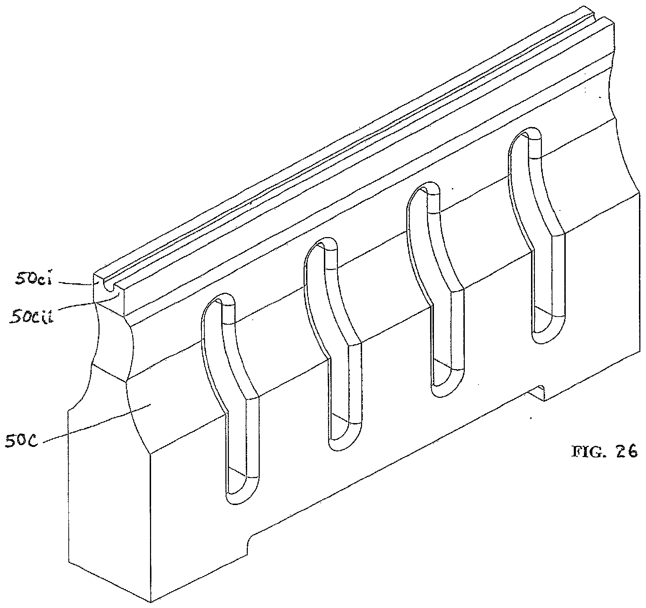

Lastly, Figure FIG. 26 shows an alternative "dual lane" horn 50C, having a first lane 50Ci and a second lane 50Cii. The dual lane horn 50C accomplishes ultrasonic welding according to the present invention, and also accommodates a blade, which may cut through the center of the welded materials along the weld line, after welding is completed, with the blade being able to bottom-out in the valley between the lanes.

## Claims

1. An ultrasonic sealing station, for use in supporting an anvil and sonotrode of an ultrasonic welding stack of a form-fill-seal machine or pre-made pouch machine, said ultrasonic sealing station comprising:
a housing (20, 21, 22);
a linear rail (50) with a portion fixedly secured to a portion of said housing (20, 21, 22);
a first bearing carriage (51) slidably received upon said linear rail (50);
a second bearing carriage (53) slidably received upon said linear rail (50);
a first mounting member (30) fixedly secured to said first bearing carriage (51) to be slidable relative to said housing (20, 21, 22); said first mounting member (30) configured to fixedly secure an anvil thereto;
a second mounting member (40) fixedly secured to said second bearing carriage (53) to be slidable relative to said housing (20, 21, 22); said second mounting member (40) configured to fixedly secure a sonotrode thereto;
**characterized in that**
said ultrasonic sealing station further comprises a first fluidic muscle (16) and a second fluidic muscle (17), wherein the fluidic muscles (16, 17) each have an expansible chamber that expands radially, accompanied by a corresponding contraction in its length;
said first fluidic muscle (16) configured with a first end (16A) secured to a portion of said housing (20, 21, 22) and with a second end (16B) secured to said first mounting member (30);
said second fluidic muscle (17) configured with a first end (17A) secured to a portion of said housing (20, 21, 22) and with a second end (17B) secured to said second mounting member (40); wherein said first and second fluidic muscles (16, 17) are configured to be pressurized to cause corresponding translation of said first and second mounting members (30, 40) relative to said housing (20, 21, 22), to cause convergent translation of said first and second mounting members (30, 40).

2. The ultrasonic sealing station according to claim 1 further comprising:
an anvil (12) secured to said first mounting member (30);
a sonotrode (13) secured to said second mounting member (40); and
wherein said respective securement of said anvil (12) and sonotrode (13) to said first and second mounting members (30, 40) is configured to cause engagement between a surface of said anvil (12) and a surface of said sonotrode (13), by said convergent translation of said first and second mounting members (30, 40).

3. The ultrasonic sealing station according to claim 2, wherein said first and second fluidic muscles (16, 17) are configured to be depressurized to cause reverse-translation and divergence of said first and second mounting members (30, 40) relative to said housing (20, 21, 22), to cause disengagement of said surface of said anvil (12) from said surface of said sonotrode (13).

4. The ultrasonic sealing station according to claim 2, wherein said first fluidic muscle (16) and said second fluidic muscle (17) are substantially the same size, and are configured to provide a substantially equal amount of translation for said first mounting member (30) and for said second mounting member (40).

5. The ultrasonic sealing station according to claim 2, wherein said sonotrode (13) is releasably secured to said second mounting member (40), said releasable securement comprising: a first pair of clamp blocks (65U, 66U), with each being fixedly secured to said second mounting member (40), and a second pair of corresponding clamp blocks (65L, 66L) being respectively secured to said first set of clamp blocks (65U, 66U) using a set screw (67), to thereby releasably secure said sonotrode (13) between said first pair of clamp blocks (65U, 66U) and said second pair of clamp blocks (65L, 66L).

6. The ultrasonic sealing station according to claim 5, wherein said anvil (12) is adjustably secured to said first mounting member (30), said adjustable securement comprising: a plurality of mounting feet (66A-66G) threadably engaged within internally threaded orifices in said anvil (12), and a corresponding plurality of screws (68) to secure said plurality of mounting feet (66A-66G) to said first mounting member (30).

7. The ultrasonic sealing station according to claim 1 or 2, wherein said first and second fluidic muscles (16, 17) are secured to said housing (20, 21, 22), and respectively secured to said first and said second mounting members (30, 40) to form a narrow profile, with each said fluidic muscle disposed in-line with respect to said linear rail (50), and in-line with respect to said anvil (12) and sonotrode (13).

8. The ultrasonic sealing station according to claim 7, wherein said first end of said first fluidic muscle (16) is secured to said housing (20, 21, 22) through an orifice in said second mounting member (40); and wherein said first end of said second fluidic muscle (17) is secured to said housing (20, 21, 22) through an orifice in said first mounting member (30).

9. A method of retrofitting one or more heat sealing elements of a form-fill-seal machine, with an advanced sonotrode and anvil, said method comprising:
removal of said one or more heat sealing elements and associated support brackets;
providing a retrofit kit, said retrofit kit comprising:
a housing (20, 21, 22);
a linear rail (50) with a portion fixedly secured to a portion of said housing (20, 21, 22);
a first bearing carriage (51) slidably received upon said linear rail (50);
a second bearing carriage slidably received upon said linear rail (50);
a first fluidic muscle (16);
a second fluidic muscle (17), wherein the fluidic muscles (16, 17) each have an expansible chamber that expands radially, accompanied by a corresponding contraction in its length;
a first mounting member (30) fixedly secured to said first bearing carriage (51) to be slidable relative to said housing (20, 21, 22); said first fluidic muscle (16) configured with a first end (16A) secured to a portion of said housing (20, 21, 22) and with a second end (16B) secured to said first mounting member (30);
said first mounting member (30) configured to fixedly secure a said anvil (12) thereto;
a second mounting member (40) fixedly secured to said second bearing carriage (53) to be slidable relative to said housing (20, 21, 22); said second fluidic muscle (17) configured with a first end (17A) secured to a portion of said housing (20, 21, 22) and with a second end (17B) secured to said second mounting member (40); said second mounting member (40) configured to fixedly secure a said sonotrode (13) thereto;
an anvil (12) secured to said first mounting member (30);
a sonotrode (13) secured to said second mounting member (40);
wherein said first and second fluidic muscles (16, 17) are configured to be pressurized to cause corresponding translation of said first and second mounting members (30, 40) relative to said housing (20, 21, 22), to cause convergent translation of said first and second mounting members (30, 40);
drilling mounting holes in a frame of the machine; and
installing said retrofit kit in the frame of the machine by securing said housing (20, 21, 22) of said retrofit kit to the frame using a fastening means.

## Patentansprüche

1. Ultraschallsiegelstation zur Verwendung als Aufnahme eines Ambosses und einer Sonotrode eines Ultraschallschweißstapels einer Form-Füll-Siegel-Maschine oder einer Maschine für vorgefertigte Beutel, wobei die Ultraschallsiegelstation Folgendes ausweist:
ein Gehäuse (20, 21, 22);
eine lineare Schiene (50)mit einem Abschnitt, der fest an einem Abschnitt des Gehäuses (20, 21, 22) befestigt ist;
einen ersten Tragschlitten (51), der gleitend auf der linearen Schiene (50) aufgenommen ist;
einen zweiten Tragschlitten (53), der gleitend auf der linearen Schiene (50) aufgenommen ist;
ein erstes Lagerungselement (30), das fest an dem ersten Tragschlitten (51) befestigt ist, um relativ zum Gehäuse (20, 21, 22) verschiebbar zu sein; wobei das erste Lagerungselement (30) dazu ausgestaltet ist, einen Amboss fest daran anzubringen;
ein zweites Lagerungselement (40), das fest an dem zweiten Tragschlitten (53) befestigt ist, um relativ zum Gehäuse (20, 21, 22) gleiten zu können; wobei das zweite Lagerungselement (40) dazu ausgestaltet ist, eine Sonotrode fest daran anzubringen;
**gekennzeichnet dadurch, dass**
die Ultraschallsiegelstation ferner einen ersten fluidischen Muskel (16) und einen zweiten fluidischen Muskel (17) aufweist, wobei die fluidischen Muskeln (16, 17) jeweils eine ausdehnbare Kammer aufweisen, die sich radial ausdehnt, einhergehend mit einer entsprechenden Kontraktion in ihrer Länge;
wobei der erste fluidische Muskel (16) mit einem ersten Ende (16A), das an einem Abschnitt des Gehäuses (20, 21, 22) befestigt ist, und mit einem zweiten Ende (16B), das an dem ersten Lagerungselement (30) befestigt ist, ausgestaltet ist;
wobei der zweite fluidische Muskel (17) mit einem ersten Ende (17A), das an einem Abschnitt des Gehäuses (20, 21, 22) befestigt ist, und mit einem zweiten Ende (17B), das an dem zweiten Lagerungselement (40) befestigt ist, ausgestaltet ist; wobei
der erste und zweite fluidische Muskel (16, 17) dazu ausgelegt sind, mit Druck beaufschlagt zu werden, um eine entsprechende Verschiebung des ersten und des zweien Lagerungselements (30, 40) relativ zum Gehäuse (20, 21, 22) zu bewirken, um eine Verschiebung des ersten und zweiten Lagerungselements (30, 40) aufeinander zu zu bewirken.

2. Ultraschallsiegelstation nach Anspruch 1, die ferner Folgendes aufweist:
einen Amboss (12), der an dem ersten Lagerungselement (30) befestigt ist;
eine Sonotrode (13), die an dem zweiten Lagerungselement (40) befestigt ist; und
wobei die jeweilige Befestigung des Amboss (12) und der Sonotrode (13) an dem ersten bzw. dem zweiten Lagerungselement (30, 40) dazu ausgelegt ist, durch die aufeinander zulaufende Verschiebung des ersten und des zweiten Lagerungselements (30, 40) einen Eingriff zwischen einer Oberfläche des Amboss (12) und einer Oberfläche der Sonotrode (13) zu bewirken.

3. Ultraschallsiegelstation nach Anspruch 2, wobei der erste und zweite fluidische Muskel (16, 17) dazu ausgelegt sind, dass Druck von ihnen abgelassen wird, um eine Gegenverschiebung und Divergenz des ersten und des zweiten Lagerungselements (30, 40) relativ zum Gehäuse (20, 21, 22) zu bewirken, um ein Lösen der Oberfläche des Amboss (12) von der Oberfläche der Sonotrode (13) zu bewirken.

4. Ultraschallsiegelstation nach Anspruch 2, wobei der erste fluidische Muskel (16) und der zweite fluidische Muskel (17) im Wesentlichen die gleiche Größe aufweisen und dazu ausgelegt sind, ein im Wesentlichen gleiches Verschiebungsmaß für das erste Lagerungselement (30) und für das zweite Lagerungselement (40) bereitzustellen.

5. Ultraschallsiegelstation nach Anspruch 2, wobei die Sonotrode (13) lösbar an dem zweiten Lagerungselement (40) befestigt ist, wobei die lösbare Befestigung Folgendes aufweist: ein erstes Paar Klemmblöcke (65U, 66U), wobei jeder fest an dem zweiten Lagerungselement (40) befestigt ist, und ein zweites Paar entsprechender Klemmblöcke (65L, 66L), die jeweils unter Verwendung einer Stellschraube (67) an dem ersten Satz von Klemmblöcken (65U, 66U) befestigt sind, um dadurch die Sonotrode (13) entfernbar zwischen dem ersten Paar Klemmblöcken (65U, 66U) und dem zweiten Paar Klemmblöcken (65L, 66L) zu befestigen.

6. Ultraschallsiegelstation nach Anspruch 5, wobei der Amboss (12) verstellbar an dem ersten Lagerungselement (30) befestigt ist, wobei die verstellbare Befestigung Folgendes aufweist: eine Vielzahl an Befestigungsfüßen (66A-66G), die in Gewindeeingriff mit Öffnungen mit Innengewinden in dem Amboss (12) stehen, und eine entsprechende Vielzahl an Schreiben (68), um die Vielzahl an Befestigungsfüßen (66A-66G) an dem ersten Lagerungselement (30) anzubringen.

7. Ultraschallsiegelstation nach Anspruch 1 oder 2, wobei der erste und zweite fluidische Muskel (16, 17) an dem Gehäuse (20, 21, 22) befestigt sind und jeweils an dem ersten und zweiten Lagerungselement (30, 40) befestigt sind, um ein schmales Profil zu bilden, wobei jeder fluidische Muskel bezüglich der linearen Schiene (50) und bezüglich des Amboss (12) und der Sonotrode (13) ausgerichtet ist.

8. Ultraschallsiegelstation nach Anspruch 7, wobei das erste Ende des ersten fluidischen Muskels (16) an dem Gehäuse (20, 21, 22) durch eine Öffnung in dem zweiten Lagerungselement (40) hindurch befestigt ist; und wobei das erste Ende des zweiten fluidischen Muskels (17) durch die Öffnung in dem ersten Lagerungselement (30) hindurch an dem Gehäuse (20, 21, 22) befestigt ist.

9. Verfahren zum Nachrüsten eines oder mehrerer Heißsiegelelemente einer Form-Füll-Siegel-Maschine mit einer weiterentwickelten Sonotrode und einem weiterentwickelten Amboss, wobei das Verfahren Folgendes aufweist:
Entfernen des einen bzw. der mehreren Heißsiegelelemente und zugeordneten Halterungen;
Bereitstellen eines Nachrüstsatzes, der Folgendes aufweist:
ein Gehäuse (20, 21, 22);
eine lineare Schiene (50), wobei ein Abschnitt fest an einem Abschnitt des Gehäuses (20, 21, 22) befestigt ist;
einen ersten Tragschlitten (51), der gleitend auf der linearen Schiene (50) aufgenommen ist;
einen zweiten Tragschlitten (53), der gleitend auf der linearen Schiene (50) aufgenommen ist;
einen ersten fluidischen Muskel (16);
einen zweiten fluidischen Muskel (17), wobei die fluidischen Muskeln (16, 17) jeweils eine ausdehnbare Kammer aufweisen, die sich radial ausdehnt, einhergehend mit einer entsprechenden Kontraktion in ihrer Länge;
ein erstes Lagerungselement (30), das fest an dem ersten Tragschlitten (51) befestigt ist, um relativ zum Gehäuse (20, 21, 22) verschiebbar zu sein; wobei der erste fluidische Muskel (16) dazu ausgestaltet ist, mit einem ersten Ende (16A) fest an einem Abschnitt des Gehäuses (20, 21, 22) befestigt zu sein und mit einem zweiten Ende (16B) an dem ersten Lagerungselement (30) befestigt zu sein; wobei das erste Lagerungselement (30) dazu ausgestaltet ist, den Amboss (12) fest daran anzubringen;
ein zweites Lagerungselement (40), das fest an dem zweiten Tragschlitten (53) befestigt ist, um relativ zum Gehäuse(20, 21, 22) verschiebbar zu sein; wobei der zweite fluidische Muskel (17) dazu ausgestaltet ist, mit einem ersten Ende (17A) fest an einem Abschnitt des Gehäuses (20, 21, 22) befestigt zu sein und mit einem zweiten Ende (17B) an dem zweiten Lagerungselement (40) befestigt zu sein; wobei das zweite Lagerungselement (40) dazu ausgestaltet ist, die Sonotrode (13) fest daran anzubringen;
einen Amboss (12), der an dem ersten Lagerungselement (30) befestigt ist;
eine Sonotrode (13), die an dem zweiten Lagerungselement (40) befestigt ist;
wobei der erste und zweite fluidische Muskel (16, 17) dazu ausgelegt sind, mit Druck beaufschlagt zu werden, um eine entsprechende Verschiebung des ersten und des zweien Lagerungselements (30, 40) bezüglich des Gehäuses (20, 21, 22) zu bewirken, um eine zulaufende Verschiebung des ersten und zweiten Lagerungselements (30, 40) zu bewirken.
Bohren von Befestigungslöchern in einen Rahmen der Maschine; und
Installieren des Nachrüstsatzes an dem Rahmen der Maschine, indem das Gehäuse (20, 21, 22) des Nachrüstsatzes unter Verwendung eines Befestigungsmittels an dem Rahmen befestigt wird.

## Revendications

1. Poste de scellage ultrasonique, destiné à être utilisé en support d'une enclume et d'une sonotrode d'un magasin de soudage ultrasonique d'une machine de formage-remplissage-scellage ou d'une machine à emballer sous sachets pré-fabriqués, ledit poste de scellage ultrasonique comprenant :
un logement (20, 21, 22) ;
un rail linéaire (50) avec une partie fixée fixement à une partie dudit logement (20, 21, 22) ;
un premier chariot à palier (51) reçu de façon coulissante sur ledit rail linéaire (50) ;
un second chariot à palier (53) reçu de façon coulissante sur ledit rail linéaire (50) ;
un premier membre de montage (30) fixé fixement sur ledit premier chariot à palier (51) pour pouvoir coulisser par rapport audit logement (20, 21, 22) ; ledit premier membre de montage (30) configuré pour fixer fixement une enclume dessus ;
un second membre de montage (40) fixé fixement sur ledit second chariot à palier (53) pour pouvoir coulisser par rapport audit logement (20, 21, 22) ; ledit second membre de montage (40) configuré pour fixer fixement une sonotrode dessus ;
**caractérisé en ce que**
ledit poste de scellage ultrasonique comprend en outre un premier muscle fluidique (16) et un second muscle fluidique (17), dans lequel les muscles fluidiques (16, 17) ont chacun une chambre extensible qui s'étend radialement, accompagnée d'une contraction correspondante dans sa longueur ;
ledit premier muscle fluidique (16) configuré avec une première extrémité (16A) fixée sur une partie dudit logement (20, 21, 22) et avec une seconde extrémité (16B) fixée sur ledit premier membre de montage (30) ;
ledit second muscle fluidique (17) configuré avec une première extrémité (17A) fixée sur une partie dudit logement (20, 21, 22) et avec une seconde extrémité (17B) fixée sur ledit second membre de montage (40) ; dans lequel
lesdits premier et second muscles fluidiques (16, 17) sont configurés pour être pressurisés pour provoquer la translation correspondante desdits premier et second membres de montage (30, 40) par rapport audit logement (20, 21, 22), pour provoquer la translation convergente desdits premier et second membres de montage (30, 40).

2. Poste de scellage ultrasonique selon la revendication 1, comprenant en outre :
une enclume (12) fixée sur ledit premier membre de montage (30) ;
une sonotrode (13) fixée sur ledit second membre de montage (40) ; et
dans lequel ladite fixation respective desdites enclume (12) et sonotrode (13) sur lesdits premier et second membres de montage (30, 40) est configurée pour provoquer l'engagement entre une surface de ladite enclume (12) et une surface de ladite sonotrode (13), par ladite translation convergente desdits premier et second membres de montage (30, 40).

3. Poste de scellage ultrasonique selon la revendication 2, dans lequel lesdits premier et second muscles fluidiques (16, 17) sont configurés pour être dépressurisés pour provoquer la translation inverse et la divergence desdits premier et second membres de montage (30, 40) par rapport audit logement (20, 21, 22) pour provoquer le désengagement de ladite surface de ladite enclume (12) de ladite surface de ladite sonotrode (13).

4. Poste de scellage ultrasonique selon la revendication 2, dans lequel ledit premier muscle fluidique (16) et ledit second muscle fluidique (17) sont essentiellement de la même taille, et sont configurés pour fournir une quantité essentiellement égale de translation pour ledit premier membre de montage (30) et ledit second membre de montage (40).

5. Poste de scellage ultrasonique selon la revendication 2, dans lequel ladite sonotrode (13) est fixée de façon amovible audit second membre de montage (40), ladite fixation amovible comprenant : une première paire de blocs de serrage (65U, 66U), chacun étant fixé fixement audit second membre de montage (40), et une seconde paire de blocs de serrage (65L, 66L) correspondants, étant respectivement fixés audit premier jeu de blocs de serrage (65U, 66U) en utilisant une vis de réglage (67) pour fixer ainsi de façon amovible ladite sonotrode (13) entre ladite première paire de blocs de serrage (65U, 66U) et ladite seconde paire de blocs de serrage (65L, 66L).

6. Poste de scellage ultrasonique selon la revendication 5, dans lequel ladite enclume (12) est fixée de façon ajustable audit premier membre de montage (30), ladite fixation ajustable comprenant : une pluralité de pieds de montage (66A-66G) engagés de façon filetée à l'intérieur d'orifices filetés à l'intérieur dans ladite enclume (12), et une pluralité correspondante de vis (68) pour fixer ladite pluralité de pieds de montage (66A-66G) audit premier membre de montage (30) .

7. Poste de scellage ultrasonique selon la revendication 1 ou 2, dans lequel lesdits premier et second muscles fluidiques (16, 17) sont fixés audit logement (20, 21, 22), et fixés respectivement auxdits premier et second membres de montage (30, 40) pour former un profilé étroit, avec chaque dit muscle fluidique disposé en ligne par rapport audit rail linéaire (50) et en ligne par rapport auxdites enclume (12) et sonotrode (13).

8. Poste de scellage ultrasonique selon la revendication 7, dans lequel ladite première extrémité dudit premier muscle fluidique (16) est fixée audit logement (20, 21, 22) au travers d'un orifice dans ledit second membre de montage (40) ; et dans lequel ladite première extrémité dudit second muscle fluidique (17) est fixée audit logement (20, 21, 22) au travers d'un orifice dans ledit premier membre de montage (30).

9. Procédé de rééquipement d'un ou plusieurs éléments de thermosoudage d'une machine de formage-remplissage-scellage avec une sonotrode et une enclume avancées, ledit procédé comprenant :
le retrait dudit/desdits un ou plusieurs élément(s) de thermosoudage et des fixations de support associées ;
la fourniture d'un kit de rééquipement, ledit kit de rééquipement comprenant :
un logement (20, 21, 22) ;
un rail linéaire (50) avec une partie fixée fixement à une partie dudit logement (20, 21, 22) ;
un premier chariot à palier (51) reçu de façon coulissante sur ledit rail linéaire (50) ;
un second chariot à palier (53) reçu de façon coulissante sur ledit rail linéaire (50) ;
un premier muscle fluidique (16) ;
un second muscle fluidique (17), dans lequel les muscles fluidiques (16, 17) ont chacun une chambre expansible qui s'agrandit radialement, accompagnée d'une contraction correspondante dans sa longueur ;
un premier membre de montage (30) fixé fixement sur ledit premier chariot à palier (51) pour pouvoir coulisser par rapport audit logement (20, 21, 22) ; ledit premier muscle fluidique (16) configuré avec une première extrémité (16A) fixée à une partie dudit logement (20, 21, 22) et avec une seconde extrémité (16B) fixée audit premier membre de montage (30) ; ledit premier membre de montage (30) configuré pour fixer fixement ladite enclume (12) dessus ;
un second membre de montage (40) fixé fixement sur ledit second chariot à palier (53) pour pouvoir coulisser par rapport audit logement (20, 21, 22) ; ledit second muscle fluidique (17) configuré avec une première extrémité (17A) fixée à une partie dudit logement (20, 21, 22) et avec une seconde extrémité (17B) fixée audit second membre de montage (40) ; ledit second membre de montage (40) configuré pour fixer fixement une dite sonotrode (13) dessus ; .
une enclume (12) fixée sur ledit premier membre de montage (30) ;
une sonotrode (13) fixée sur ledit second membre de montage (40) ;
lesdits premier et second muscles fluidiques (16, 17) sont configurés pour être pressurisés pour provoquer la translation correspondante desdits premier et second membres de montage (30, 40) par rapport audit logement (20, 21, 22), pour provoquer la translation convergente desdits premier et second membres de montage (30, 40) ;
le perçage de trous de montage dans un châssis de la machine ; et
l'installation dudit kit de rééquipement dans le châssis de la machine en fixant ledit logement (20, 21, 22) dudit kit de rééquipement sur le châssis en utilisant un moyen de fixation.
